# EUROPEAN PATENT APPLICATION

(11) **EP 2 012 486 A1**
(43) Date of publication of application: **07.01.2009**
(21) Application number: 07720946.8
(22) Date of filing: 24.04.2007
(51) Int. Cl.: H04L 12/66, H04Q 7/20, H04L 12/54, H04L 29/06

(54) **METHOD, SYSTEM AND APPARATUS FOR PROCESSING SUPPLEMENTARY SERVICES**

(30) Priority: 26.04.2006 CN 200610077916; 16.10.2006 CN 200610150280
(71) Applicant: Huawei Technologies Co., Ltd., Shenzhen, Guangdong Province 518129 (CN)
(72) Inventor: ZHU, Dongming, Shenzhen Guangdong 518129 (CN); ZHANG, Hengliang, Shenzhen Guangdong 518129 (CN)
(74) Representative: Hengelhaupt, Jürgen
(86) International application number: PCT/CN2007/001373
(87) International publication number: WO 2007/131417

(57) **Abstract**

Method, system and apparatus for processing supplementary services, and MGCF enhanced method and apparatus as well. The said method for processing supplementary services is used for supplementary services in packet network when CSI terminal and IMS terminal are interworking. The method includes: after receiving session message relating to supplementary services interworking control function entity extracts detailed content from the session message; according to the detailed content, interworking control function entity executes corresponding supplementary services. The interworking control function entity includes: supplementary service information receiving unit, which receives session message relating to supplementary services and extracts detailed content from the session message; supplementary service operating unit, which executes corresponding supplementary services according to the detailed content.

## Description

This application claims priority to Chinese patent application No. 200610077916.2, entitled "SYSTEM, METHOD AND DEVICE FOR IMPLEMENTING SUPPLEMENTARY SERVICE IN PACKET NETWORK", filed with the Chinese Patent Office on April 26, 2006, and priority to Chinese patent application No. 200610150280.X, entitled "METHOD, SYSTEM AND DEVICE FOR PROCESSING SUPPLEMENTARY SERVICE", filed with the Chinese Patent Office on October 16, 2006, which are hereby incorporated by reference in their entireties.

### Field of the Invention

The present invention relates to the communications field, in particular to a method, system and device for processing a supplementary service when a CSI terminal interworks with an IMS terminal in a packet network, and further relates to an MGCF enhancement method and device.

### Background of the Invention

Combining CS and IMS (CSI) services are a research task in which people are interested, in the Third Generation Partnership Project (3GPP) standards. This research task is intended to address how to combine the 3G Call Control (CS) domain service and the IP Multimedia Subsystem (IMS) domain service.

The CSI phase 1 (the first phase of CSI) is focused on the research of how to associate the Circuit Switched (CS) domain call with an IMS domain session of a CS IMS dual-mode terminal. A CSI phase 1 terminal makes preferential use of the CS to bear its real time voice service due to the limitation of its bearer capability.

The CSI terminal as mentioned below refers to the CSI phrase 1 terminal unless stated otherwise. When a CSI User Equipment (CSI UE, i.e. a CSI terminal) interworks with an IMS User Equipment (IMS UE, i.e. an IMS terminal), a problem may exist, that is: if the IMS UE calls the CSI UE (through an IMS signaling) to set up a voice session, the IMS session will reach the IMS part of the CSI UE directly, and an IMS voice session will be set up directly between the two terminals after the CSI UE receives the request message; however, the CSI UE prefers making use of the CS to set up a real time voice session due to the limited IMS Quality of Service (QoS) at its side and the like.

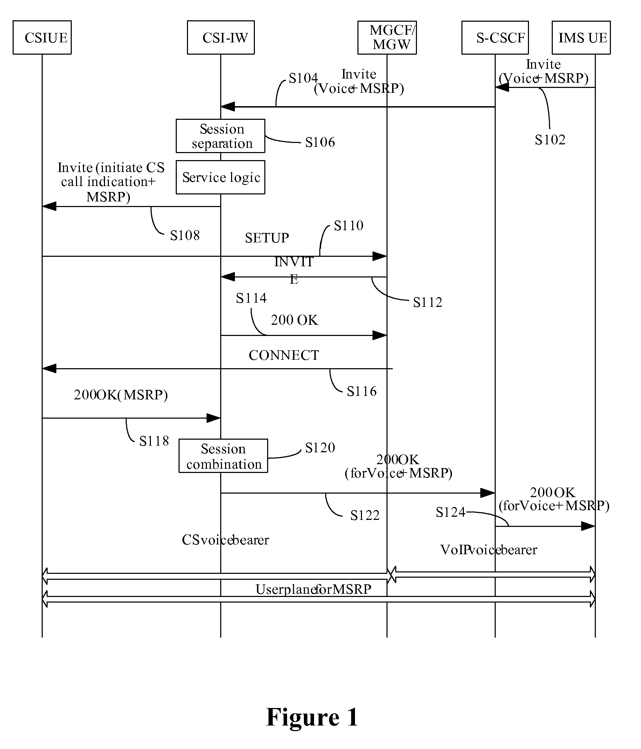

Figure 1 illustrates the interworking architecture for a CSI terminal and an IMS terminal in the related art (3GPP TS 23.002 Network architecture). For convenience of description, in this context, the present invention is described illustratively by taking the interworking between the CSI terminal and the IMS terminal as an example, but the present invention will not be limited to the two terminals. For example, the present invention can be also applicable to other Voice over IP (VoIP) terminals.

The following related art is involved in the implementation of the interworking between a CSI terminal and an IMS terminal.

An interworking control function entity is arranged at the CSI terminal side. This function entity, on receiving a session request from the IMS terminal, divides session messages including various media components in accordance with relevant information so that the session is divided into a session including real time media components and a session including non-real time media components. After that, the interworking control function entity determines in accordance with relevant information to terminate the real time session in the CS domain and the non-real time session in the IMS domain. The architecture of this solution is illustrated as in Figure 1 with a flow including the following steps.

In step S102, a VoIP terminal initiates an IMS session request to a CSI terminal. This request includes real time media description and non-real time media description.

In step S104, an IMS at the VoIP side forwards the request to a CSI-Interworking (CSI-IW) at the CSI terminal side.

In step S106, the CSI-IW performs service logic processing in accordance with relevant information to split the session request.

In step S108, the CSI-IW sends a session request to the CSI terminal. This request message includes the non-real time media description and indication information for requesting the CSI terminal to initiate establishing a bearer from the terminal to the CS domain of the network.

In step S110, the CSI terminal initiates a CS call to the CSI-IW on receiving the session request message.

In step S112, a Media Gateway Control Function (MSCF), on receiving the CS call request from the CSI terminal, maps the CS call request to an INVITE message and sends the INVITE message to the CSI-IW

In step S114, the CSI-IW sends a response message 200 OK to the MGCF.

In step S 116, the MGCF maps the response message 200 OK to a CONNECT message of the CS and sends the CONNECT message to the CSI terminal.

In step 118, the CSI terminal sends a response message 200 OK including only non-real time media information (MSRP).

In step S120, the CSI-IW combines the IMS session and the CS call from the CSI terminal.

In step S122, the CSI-IW sends the combined response message 200 OK to the called IMS.

In step S124, the called IMS forwards the message 200 OK to the VoIP terminal.

However, the architecture and the flow in the above related art do not propose a system, method and device for processing a supplementary service when the CSI terminal interworks with the IMS terminal.

Therefore, there is a need for a solution to address the issue of processing a supplementary service when the CSI terminal interworks with the IMS terminal in the above related art.

### Summary of the Invention

Embodiments of the present invention provide a method, system and device for processing a supplementary service and also an MGCF enhancement method and device, to address the issue that the supplementary service cannot be processed when a CSI terminal interworks with an IMS terminal.

Technical solutions of the embodiments of the present invention include the following.

A supplementary service processing method for a supplementary service when a CSI terminal and an IMS terminal interwork in a packet domain includes the steps of:

receiving, by an interworking control function entity, a supplementary service-related session message and extracting specific contents from the session message; and

performing, by the interworking control function entity, corresponding supplementary service operations in accordance with the extracted specific contents.

An interworking control function entity includes:

a supplementary service information reception unit, adapted to receive a supplementary service-related session message and to extract specific contents from the session message; and

a supplementary service operation unit, adapted to perform corresponding supplementary service operations in accordance with the specific contents extracted by the supplementary service information reception unit.

A media gateway control function entity, including a signaling reception unit, wherein the entity further includes:

a mapping unit A, adapted to map supplementary service-related information in circuit switched signaling received by the signaling reception unit into a session message of the IMS domain and to forward thereafter the session message to an entity in the IMS domain.

A supplementary service processing system for processing a supplementary service when a CSI terminal and an IMS terminal interwork in a packet network includes a media gateway control function entity located in the domain to which the CIS terminal is homed, wherein the system further includes:

an interworking control function entity, adapted to control the interworking and to perform corresponding supplementary service operations in accordance with specific contents of a supplementary service-related session message upon reception of the session message.

A supplementary service processing device for processing a supplementary service when a CSI terminal and an IMS terminal interwork in a packet domain includes:

a supplementary service operation module, adapted to enable an interworking control function entity to perform supplementary service operations in accordance with contents in a session message upon reception of the session message.

A media gateway control function enhancement system includes a media gateway control function entity including:

a CS signaling information to IMS signaling information mapping module, adapted to map received supplementary service signaling information of the CS domain into signaling information of the IMS domain; and

an IMS signaling information to CS signaling information mapping module, adapted to map received supplementary service signaling information of the IMS domain into signaling information of the CS domain.

A media gateway control function enhancement method includes the steps of:

if a media gateway control function entity receives supplementary service signaling information of the CS domain, mapping it into signaling information of the IMS domain; and

if the media gateway control function entity receives supplementary service signaling information of the IMS domain, mapping it into signaling information of the CS domain.

Advantageous effects of the embodiments of the invention are as follows.

In the supplementary service processing method according to the embodiments of the present invention, an interworking control function entity receives a supplementary service-related session message and extracts specific contents from the session message; and the interworking control function entity performs corresponding supplementary service operations in accordance with the extracted specific contents.

In order to support the method of the present invention, the embodiments of the present invention further provide an interworking control function entity, a media gateway control function entity and a supplementary service processing system.

There are also provided a supplementary service processing device, a media gateway control function enhancement system and a media gateway control function enhancement method.

### Brief Description of the Drawings

Figure 1 illustrates an interworking architecture of a CSI terminal and an IMS terminal in the prior art;

Figure 2 is a flow chart of a supplementary service processing method according to the principle of the present invention;

Figure 3 is a block diagram of a supplementary service processing device according to the principle of the present invention;

Figure 4 is a schematic diagram of a structure of an interworking control function entity according to the principle of the present invention;

Figure 5 is a schematic diagram of a structure of a media gateway control function entity according to the principle of the present invention;

Figure 6 illustrates a system and a method, in which an IMS terminal calls a CSI terminal, a CS call of the CSI terminal is forwarded and a CSI-IW decides not to set up a non-real time media session, according to a first embodiment of the present invention;

Figure 7 illustrates a system and a method, in which an IMS terminal calls a CSI terminal, a CS call of the CSI terminal is forwarded and a CSI-IW receives a forwarding indication message and decides to set up only a non-real time media session, according to a second embodiment of the present invention;

Figure 8 illustrates a system and a method, in which an IMS terminal calls a CSI terminal and a CS call of the CSI terminal triggers an ECT service, according to a third embodiment of the present invention;

Figure 9 is a signaling flow chart of the method according to a fourth embodiment of the present invention; and

Figure 10 is a signaling flow chart of the method according to a fifth embodiment of the present invention.

### Detailed Description of the Embodiments

The present invention is described in detail as follows with reference to the drawings in which a supplementary service can be processed when a CSI terminal interworks with an IMS terminal.

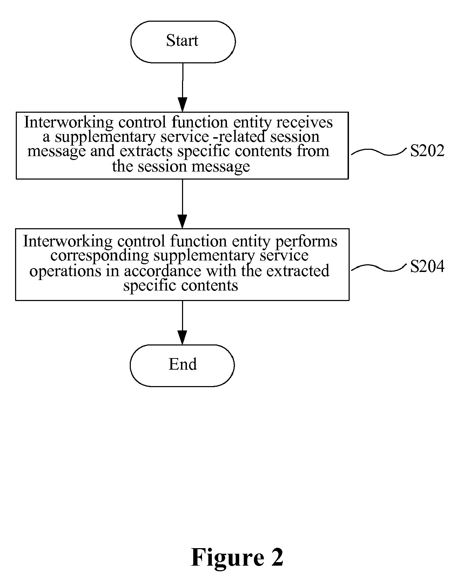

The principle of the present invention is described as follows with reference to Figure 2.

Figure 2 illustrates a flow chart of a supplementary service processing method according to the principle of the invention.

As illustrated in Figure 2, the supplementary service processing method when a CSI terminal interworks with an IMS terminal includes the following steps.

In step 202, when a session/sessions is established between the CSI terminal and the IMS terminal, an interworking control function entity receives a supplementary service-related session message and obtains specific content from the session message, a specific procedure of which is described in detail as follows; and

In step 204, the interworking control function entity performs corresponding operations in accordance with the obtained specific content, specific processing operations of which is described in detail as follows.

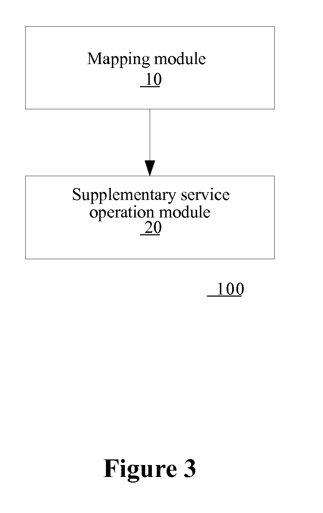

Figure 3 illustrates a block diagram of a supplementary service processing device 100 according to the present invention.

As illustrated in Figure 3, the device for processing a supplementary service when a CSI terminal interworks with an IMS terminal includes:

a mapping module 10, which is, when a session is establish between the CSI terminal and the IMS terminal, adapted to instruct an MGCF in the home domain of the CSI terminal to map supplementary service-related information of CS signaling and IMS signaling to a signaling message of the IMS domain and then to forward the signaling message to an interworking control function entity; and

a supplementary service operation module 20, which is adapted to perform further processing in accordance with different message contents in the signaling message as well as service logic when the interworking control function entity receives the signaling message.

Particularly, the mapping module 10 may include: a first mapping module (not shown in the Figure), adapted to instruct the MGCF to notify the interworking control function entity of a forwarding indication message for a call in CS domain of the CSI terminal if the MGCF receives the forwarding indication message; a second mapping module (not shown in the Figure), adapted to instruct the MGCF to notify the interworking control function entity of a forward-to number if the MGCF receives a response message to the forwarded call of the CS domain; and a third mapping module (not shown in the Figure), adapted to instruct the MGCF to notify the CSI-IW of transfer-to number information if the MGCF receives information of an Explicit Call Transfer (ECT) service of the CS domain.

In accordance with the above principle, an embodiment of the present invention provides a supplementary service processing method including the following specific steps.

■ When a session is established between a CSI terminal and an IMS terminal, an interworking control function entity obtains specific content from a supplementary service-related session message on receiving the session message (step S202).

In this step, the specific content of the supplementary service-related session message received by the interworking control function entity includes at least one of the following: supplementary service information of the CS domain, response information of an IMS domain session, and supplementary service information of the IMS domain session.

Because of the variation of the specific contents of session messages, there may be two cases for the supplementary service-related session message received by the interworking control function entity.

• Case 1: A media gateway control function entity in the home domain of the CSI terminal receives a supplementary service-related session message in a circuit switched signaling, maps supplementary service-related information in the circuit switched signaling to a session message of the IMS domain, and then forwards the mapped session message to the interworking control function entity

• Case 2: A supplementary service occurs in the IMS domain, and a supplementary service session message of the IMS domain is reported from the CSI terminal to the interworking control function entity directly (alternatively, the media gateway control function entity may map supplementary service-related information in an IMS signaling to a session message of the CS domain and then forward the session message to an entity in the CS domain).

In the above case 1, the supplementary service-related circuit switched signaling relates to different specific services, and the media gateway control function entity therefore takes different mapping policies, including but not limited to the following five sub cases.

▲ Sub case 11: If the supplementary service-related information in the circuit switched signaling is a call forwarding indication message of the CS domain of the CSI terminal, the call forwarding indication message is mapped to an IMS domain-related session message. In a specific implementation, the call forwarding indication message of the CS domain may be mapped to a message 181 of the IMS domain.

▲ Sub case 12: If the supplementary service-related information in the circuit switched signaling is a response message to a forwarded call of the CS domain, the call response message is mapped to a session message of the IMS domain.

▲ Sub case 13: If the supplementary service-related information in the circuit switched signaling is information of an ECT service of the CS domain, information of a transfer-to number of the CS domain is mapped to session information of the IMS domain.

▲ Sub case 14: If the supplementary service-related information in the circuit switched signaling is information of a call holding service or a call resumption service, the information is mapped to an Update message of the IMS domain.

▲ Sub case 15: If the supplementary service-related information in the circuit switched signaling is a call failure message of the CS domain, the call failure message is mapped to a call failure message of the IMS domain.

In the above case 2, the supplementary service-related IMS session message relates to different specific services including but not limited to the following four sub cases.

▲ Sub case 21: A media activation/deactivation service occurs in the IMS domain.

▲ Sub case 22: An IMS domain session fails.

▲ Sub case 23: An IMS domain session is forwarded.

▲ Sub case 24: A transfer service occurs in an IMS domain session of the CSI terminal.

▲The interworking control function entity performs corresponding operations in accordance with the extracted specific contents (step S204).

Specific operations of the interworking control function entity are described below respectively in correspondence with the two cases for the supplementary service-related session message received by the interworking control function entity and the different specific services related to the supplementary service-related session message.

▲ In correspondence with the sub case 11 in the case 1, the interworking control function entity receives the relevant session message (which indicates that the CS domain call of the CSI terminal is forwarded) of the IMS domain sent from the media gateway control function entity, and performs one of the following operations.

- The entity releases the circuit switched call between the entity and the CSI terminal, maintains or proceeds with setting up an IMS session between the entity and the CSI terminal and carries on a corresponding session negotiation with the IMS terminal;

- The entity releases an IMS session between the entity and the CSI terminal, retains only the CS call and carries on a corresponding session media negotiation with the IMS terminal; and

- The entity notifies the IMS terminal that the session or part of media of the session is forwarded.

▲ In correspondence with the sub case 12 in the case 1, the interworking control function entity performs one of the following operations in accordance with the session message of the IMS domain sent from the media gateway control function entity.

- The entity releases or cancels the forwarded CS call, maintains or proceeds with setting up an IMS session between the entity and the CSI terminal, and carries on a corresponding session media negotiation with the IMS terminal;

- The entity releases an IMS session between the entity and the CSI terminal, attempts to set up an IMS session to a transfer-to terminal, and responds to the caller with a success response message indicating that the session is successfully forwarded;

- The entity releases an IMS session between the entity and the CSI terminal, retains only the CS call and carries on a corresponding session media negotiation with the IMS terminal; and

- The entity notifies the IMS terminal that the session or part of media of the session is forwarded.

▲ In correspondence with the sub case 13 in the case 1, the interworking control function entity performs one of the following operations in accordance with the session message of the IMS domain sent from the media gateway control function entity.

- The entity releases the transferred circuit switched call, maintains or subsequently sets up a non-real time session between the entity and the CSI terminal, and carries on a session media negotiation or renegotiation with the IMS terminal;

- The entity releases or cancels a non-real time IMS session possibly set up between the entity and the CSI terminal, attempts to set up a non-real time IMS session to a new terminal, and carries on a session negotiation or renegotiation with the IMS terminal;

- The entity releases or cancels a non-real time IMS session between the entity and the CSI terminal, retains only the CS call, and carries on a session negotiation or renegotiation with the IMS terminal; and

- The entity notifies the IMS terminal that the ECT service session or part of media of the session is transferred in the circuit switched domain.

▲ In correspondence with the sub case 14 in the case 1, the interworking control function entity sends a relevant session modification message to the IMS terminal to perform corresponding modification of relevant media attributes of the IMS session in accordance with the received Update message of the IMS domain indicating occurrence of a call holding service or a call resumption service in the CS domain of the CSI terminal. The corresponding modification of the relevant media attributes includes: the interworking control function entity initiating a deactivation or activation operation of real time media of the IMS terminal if the interworking control function entity receives call holding or call resumption information of the CS domain.

▲ In correspondence with the sub case 15 in the case 1, the interworking control function entity performs one of the following operations in accordance with the mapped call failure message of the IMS domain sent from the media gateway control function entity, in which the call failure message indicates a failure of a call from the interworking control function entity to the CS domain of the CSI terminal.

- If there is still an IMS domain session present between the interworking control function entity and the CSI terminal, the interworking control function entity considers the status of another session and sends a corresponding response message to the IMS terminal;

- The entity maintains a non-real time IMS session probably present between the entity and the CSI terminal or proceeds with setting up a subsequent non-real time IMS session between the entity and the CSI terminal, carries on a corresponding session negotiation with the IMS terminal to remove part of media borne in the CS domain; and

- The entity releases or cancels an IMS session between the entity and the CSI terminal and responds to the IMS terminal with a failure response message.

▲ In correspondence with the sub case 21 in the case 2, the interworking control function entity receives a session message of the IMS domain, where the session message indicates occurrence of a media activation/deactivation service in the IMS domain, and sends a relevant session modification message to the IMS terminal to perform corresponding modification of relevant media attributes of the IMS session. The corresponding modification of the relevant media attributes of the IMS session includes initiation of an activation or deactivation operation of real time media of the IMS terminal.

▲ In correspondence with the sub case 22 in the case 2, the interworking control function entity receives the session message of the IMS domain, where the contents of the session message are session failure information of the IMS domain and the session failure information indicates a failure of a session from the interworking control function entity to the IMS domain of the CSI terminal, and then the interworking control function entity performs one of the following operations.

- The entity maintains a real time CS call probably present between the entity and the CSI terminal or proceeds with setting up a subsequent real time CS call between the entity and the CSI terminal, carries on a corresponding session negotiation with the IMS terminal to remove part of media borne in the IMS domain;

- The entity initiates an IMS session setting-up request to a new CS terminal in accordance with received call forward information of the CS domain and carries session forward indication information in a response message to the IMS terminal if the IMS session is set up successfully; and

- The entity releases or cancels a CS session between the entity and the CSI terminal and responds to the IMS terminal with a failure response message.

▲ In correspondence with the sub case 23 in the case 2, the interworking control function entity receives the session message of the IMS domain, where the contents of the session message are session forward indication of the IMS domain, and the forward indication indicates that a call from the interworking control function entity to the IMS domain of the CIS terminal is forwarded or the interworking control function entity receives the message which indicates that a IMS domain session of the CIS terminal is forwarded and that a forwarded-to party replies, and then performs one of the following operations.

- The entity releases or cancels the forwarded IMS session, maintains or proceeds with setting up the CS call between the entity and the CSI terminal, carries on a corresponding session negotiation with the IMS terminal to remove part of media borne in the IMS session;

- The entity releases or cancels the CS call between the entity and the CSI terminal, carries on a corresponding session negotiation with the IMS terminal to remove part of media borne in the CS call;

- The entity releases a CS session between the entity and the CSI terminal, attempts to set up a CS call with a forward-to terminal and responds to the IMS terminal with a session forwarded success response message if the CS call is set up successfully;

- The entity perceives that the CSI terminal is provided with subscription of an IMS session forward service, and triggers the IMS forward service of the CSI terminal through an appropriate mechanism; and

- The entity notifies the IMS terminal that the session or part of media of the session is forwarded.

▲ In correspondence with the sub case 24 in the case 2, the interworking control function entity receives the session message of the IMS domain where the session message indicate that a IMS domain session of the CSI terminal is forwarded, and performs one of the following operations.

- The entity releases the forwarded IMS session, maintains or subsequently sets up the CS call between the entity and the CSI terminal and carries on a session negotiation or renegotiation with the IMS terminal;

- The entity releases or cancels the CS call between the entity and the CSI terminal, attempts to set up a real time CS session with a new terminal and carries on a session negotiation or renegotiation with the IMS terminal; and

- The entity notifies the IMS terminal that the session or part of media of the session is forwarded.

The inventive supplementary service processing method has been described.

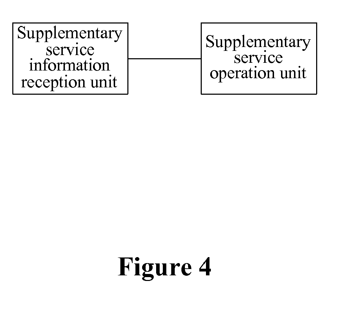

In order to support the above method, the present invention also provides correspondingly an interworking control function entity which includes a supplementary service information reception unit and a supplementary service operation unit connected to each other with reference to Figure 4.

The supplementary service information reception unit is adapted to receive a supplementary service-related session message and to extract specific contents from the session message.

The supplementary service operation unit is adapted to perform corresponding supplementary service operations in accordance with the specific contents extracted by the supplementary service information reception unit.

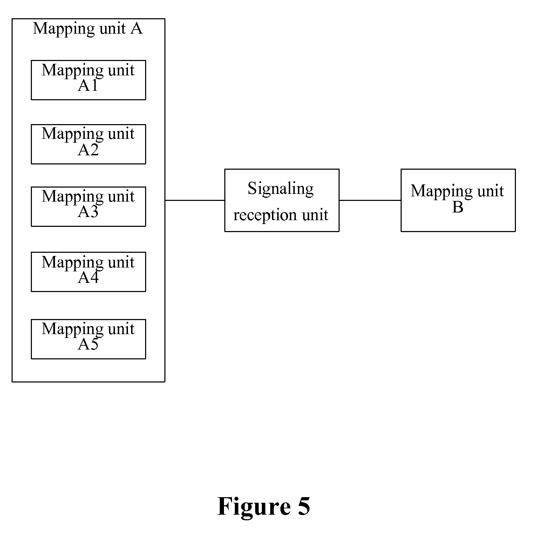

In order to support the above method, the present invention also provides a media gateway control function entity. With reference to Figure 5, the media gateway control function entity includes a signaling reception unit and a mapping unit A connected with the signaling reception unit. Further, the mapping unit A includes a mapping unit A1, a mapping unit A2, a mapping unit A3, a mapping unit A4 and a mapping unit A5, which process different specific services. Further, the media gateway control function entity can also include a mapping unit B connected with the signaling reception unit.

The mapping unit A is adapted to map supplementary service-related information in circuit switched signaling received by the signaling reception unit to a session message of the IMS domain and to forward thereafter the session message to an entity in the IMS domain (including but not limited to an interworking control function entity).

The mapping unit B is adapted to map supplementary service-related information in IMS domain signaling received by the signaling reception unit to a session message of the CS domain and to forward thereafter the session message to an entity in the CS domain

The mapping unit A1 is adapted to map a forward indication message for a call of the CS domain from the CSI terminal to a relevant session message of the IMS domain on receiving the forward indication message.

The mapping unit A2 is adapted to map a response message to the forwarded call of the CS domain to information of the IMS domain on receiving the response message.

The mapping unit A3 is adapted to map information of a transfer-to number to a session message of the IMS domain on receiving information of an ECT service of the CS domain.

The mapping unit A4 is adapted to map information of a call holding service or a call resumption service to an Update message of the IMS domain on receiving the information of a call holding service or a call resumption service.

The mapping unit A5 is adapted to map a call failure message to a call failure message of the IMS domain on receiving the call failure message.

In correspondence with the above method and devices, the present invention also provides a supplementary service processing system, for processing a supplementary service when a CSI terminal interworks with an IMS terminal in a packet network. The system includes a media gateway control function entity located in the domain to which the CSI terminal is homed and an interworking control function entity connected with the media gateway control function entity.

The media gateway control function entity is provided with the same functions such as media stream control as described in the current specifications.

The interworking control function entity is adapted to control the interworking and to perform corresponding supplementary service operations in accordance with specific contents of a supplementary service-related session message on receiving the session message.

Further in the inventive system, the media gateway control function entity is also adapted to map supplementary service-related information in circuit switched signaling to a session message of the IMS domain and to forward thereafter the session message to the interworking control function entity (it can also map supplementary service-related information in IMS domain signaling to a session message of the CS domain and then forwards the session message to a CS entity).

The media gateway control function entity receives supplementary service-related circuit switched signaling and performs the following processing.

- The media gateway control function entity receives a call forward indication message of the CS domain of the CSI terminal, maps the call forward indication message to relevant session information of the IMS domain and thereafter forwards the session information to the interworking control function entity; or

- The media gateway control function entity receives a response message to a forwarded call of the CS domain, maps the call response message to a session message of the IMS domain and thereafter forwards the session message to the interworking control function entity; or

- The media gateway control function entity receives information of an ECT service of the CS domain, maps information of a transfer-to number of the CS domain into session information of the IMS domain and thereafter forwards the session information to the interworking control function entity; or

- The media gateway control function entity receives information of a call holding service or a call resumption service, maps the information into an Update message of the IMS domain and thereafter forwards the Update message to the interworking control function entity; or

- The media gateway control function entity receives a call failure message of the CS domain, maps the call failure message to a call failure message of the IMS domain and thereafter forwards the call failure message of the IMS domain to the interworking control function entity.

Correspondingly, the interworking control function entity performs the following processing on receiving the supplementary service-related session message.

- On receiving the session message indicating that the CS domain call of the CSI terminal is forwarded, the interworking control function entity releases the circuit switched call between the entity and the CSI terminal, maintains or proceeds with setting up an IMS session between the entity and the CSI terminal, and carries on a corresponding session negotiation with the IMS terminal; or the interworking control function entity releases an IMS session between the entity and the CSI terminal, retains only the CS call and carries on a corresponding session media negotiation with the IMS terminal; or notifies the IMS terminal that the session or part of media of the session is forwarded, releases the circuit switched call between the entity and the CSI terminal, maintains or proceeds with setting up an IMS session between the entity and the CSI terminal, and carries on a corresponding session negotiation with the IMS terminal; or the interworking control function entity notifies the IMS terminal of the forward information; or

- On receiving the session message indicating that the CS domain session of the CSI terminal is forwarded and that a transfer-to party has responded, the interworking control function entity releases or cancels the forwarded CS call, maintains or proceeds with setting up an IMS session between the entity and the CSI terminal, and carries on a corresponding session media negotiation with the IMS terminal; or the interworking control function entity releases an IMS session between the entity and the CSI terminal, attempts to set up an IMS session to a forward-to terminal, and responds to the caller with a success response message indicating that the session is forwarded upon successful setting-up; or the interworking control function entity releases an IMS session between the entity and the CSI terminal, retains only the CS call, and carries on a corresponding session media negotiation with the IMS terminal; or the interworking control function entity notifies the IMS terminal that the session or part of media of the session is forwarded; or

- On receiving the session message indicating occurrence of an ECT service in the CS domain of the CSI terminal, the interworking control function entity releases the transferred circuit switched call, maintains or subsequently sets up a non-real time session between the entity and the CSI terminal, and carries on a session media negotiation or renegotiation with the IMS terminal; or initiates modification of the set-up session; or the interworking control function entity releases or cancels a non-real time IMS session probably set up between the entity and the CSI terminal, attempts to set up a non-real time IMS session to a new terminal, and carries on a session negotiation or renegotiation with the IMS terminal; or initiates modification of the set-up session; or the interworking control function entity releases or cancels a non-real time IMS session between the entity and the CSI terminal, retains only the CS call and carries on a session negotiation or renegotiation with the IMS terminal; or the interworking control function entity notifies the IMS terminal that the ECT service session or part of media of the session is transferred in the circuit switched domain; or

- On receiving the Update message indicating occurrence of a call holding service or a call resumption service in the CS domain of the CSI terminal, the interworking control function entity sends a relevant session modification message to the IMS terminal to perform corresponding modification of relevant media attributes of the IMS session; or

- On receiving the call failure message of the IMS domain indicating a failure of a call from the interworking control function entity to the CS domain of the CSI terminal, if there is still another domain session present between the interworking control function entity and the CSI terminal, the interworking control function entity shall consider the status of the another session and sends a corresponding response message to the IMS terminal; or the interworking control function entity maintains a non-real time IMS session probably present between the entity and the CSI terminal or proceeds with setting up a subsequent non-real time IMS session between the entity and the CSI terminal, carries on a corresponding session negotiation with the IMS terminal, and removes part of media borne in the CS domain; or the interworking control function entity releases or cancels an IMS session between the entity and the CSI terminal and responds to the IMS terminal with a failure response message.

• The interworking control function entity receives the supplementary service-related session message, the contents of which are information of a supplementary service occurring in the IMS domain, and performs the following processing.

- The interworking control function entity receives a session message of the IMS domain where the session message indicates occurrence of a media activation/deactivation service in the IMS domain, and sends a relevant session modification message to the IMS terminal to perform corresponding modification of relevant media attributes of the IMS session; or

- On receiving the session message of the IMS domain, where the contents of the session message are session failure information of the IMS domain, and the session failure information indicates a failure of a session from the interworking control function entity to the IMS domain of the CSI terminal, the interworking control function entity maintains a real time CS call probably present between the entity and the CSI terminal or proceeds with setting up a subsequent real time CS call between the entity and the CSI terminal, carries on a corresponding session negotiation with the IMS terminal, and removes part of media borne in the IMS domain; or the interworking control function entity initiates an IMS session setting-up request to a new CS terminal in accordance with received call forward information of the CS domain, and carries session forward indication information in a response message to the IMS terminal if the IMS session is set up successfully; or the interworking control function entity releases or cancels a CS session between the entity and the CSI terminal and responds to the IMS terminal with a failure response message; or

- On receiving the session message of the IMS domain, where the contents of the session message are session forward indication of the IMS domain, and the forward indication indicates that a call from the interworking control function entity to the IMS domain of the CSI terminal is forwarded or on receiving the message which indicates that an IMS domain session of the CSI terminal is forwarded and that a forward-to party responds, the interworking control function entity releases or cancels the forwarded IMS session, maintains or proceeds with setting up the CS call between the entity and the CSI terminal, carries on a corresponding session negotiation with IMS terminal, and removes part of media borne in the IMS session; or the interworking control function entity releases or cancels the CS call between the entity and the CSI terminal, carries on a corresponding session negotiation with the IMS terminal, and removes part of media borne in the CS call; or the interworking control function entity releases a CS session between the entity and the CSI terminal, attempts to set up a CS call with a forward-to terminal, and responds to the IMS terminal with a session forward success response message if the CS call is set up successfully; or the interworking control function entity perceives that the CSI terminal is provided with subscription information of an IMS session forward service, and triggers the IMS forward service of the CSI terminal through an appropriate mechanism; or the interworking control function entity notifies the IMS terminal that the session or part of media of the session is forwarded; or

- On receiving the session message of the IMS domain the contents of which indicate that an IMS domain session of the CSI terminal is transferred, the interworking control function entity releases the transferred IMS session, maintains or subsequently sets up the CS call between the entity and the CSI terminal, and carries on a session negotiation or renegotiation with the IMS terminal; or initiates modification of the set-up session of the IMS terminal; or the interworking control function entity releases or cancels the CS call between the entity and the CSI terminal, attempts to set up a real time CS session with a new terminal, and carries on a session negotiation or renegotiation with the IMS terminal, or initiates modification of the set-up session of the IMS terminal; or the interworking control function entity notifies the IMS terminal that the session of part of media of the session is transferred.

The MGCF in the domain to which the CSI terminal is homed:

The MGCF in the domain to which the CSI terminal is homed maps supplementary service-related information in CS signaling and IMS signaling into a signaling message of the IMS domain.

1) If the MGCF receives a call forward indication message of the CS domain of the CSI terminal, the MGCF notifies in a relevant message the CSI-IW about the indication information;

2) If the MGCF receives a response message to a forwarded call of the CS domain of the CSI terminal, the MGCF notifies in a corresponding message the CSI-IW of a forward-to number; and

3) If the MGCF receives the information of the ECT service of the CS domain of the CSI terminal, the MGCF notifies the CSI-IW about information of a transfer-to number.

In accordance with the above principle of the invention, the present invention also provides an MGCF enhancement system. The MGCF includes: a CS signaling information-to-IMS signaling information mapping module, adapted to map received supplementary service signaling information of the CS domain to signaling information of the IMS domain; and an IMS signaling information-to-CS signaling information mapping module, adapted to map received supplementary service signaling information of the IMS domain to signaling information of the CS domain.

In the above MGCF enhancement system, the MGCF performs the following processing on receiving the supplementary service signaling information of the CS domain: if the MGCF receives a forward indication message for a call of the CS domain of the CSI terminal, the MGCF notifies the interworking control function entity CSI-IW of the forward indication message; if the MGCF receives a response message to a forwarded call of the CS domain, the MGCF notifies the CSI-IW of a forward-to number; and if the MGCF receives information of an ECT service of the CS domain, the MGCF notifies the CSI-IW of a transfer-to number.

In accordance with the above principle, the present invention also provides an MGCF enhancement method including the following steps: if the MGCF receives supplementary service signaling information of the CS domain, the MGCF maps the supplementary service signaling information of the CS domain into signaling information of the IMS domain; and if the MGCF receives supplementary service signaling information of the IMS domain, the MGCF maps the supplementary service signaling information of the IMS domain into signaling information of the CS domain.

In the above MGCF enhancement method, the MGCF performs the following processing on receiving the supplementary service signaling information of the CS domain: if the MGCF receives a forward indication message for a call of the CS domain of the CSI terminal, the MGCF notifies the CSI-IW about the forward indication message; if the MGCF receives a response message to a forwarded call of the CS domain, the MGCF notifies the CSI-IW of a forward-to number; and if the MGCF receives information of an ECT service of the CS domain, the MGCF notifies the CSI-IW of a transfer-to number.

As can be seen, the supplementary service may occur in the CS domain or in the IMS domain.

If the supplementary service occurs in the CS domain, the media gateway control function entity in the domain to which the CSI terminal is homed maps supplementary service-related information in circuit switched signaling to a session message of the IMS domain and thereafter forwards the session message to the interworking control function entity, and the interworking control function entity performs corresponding supplementary service operations in accordance with specific contents of the session message, thereby achieving processing of the supplementary service in the CS domain when the CSI terminal interworks with the IMS terminal.

If the supplementary service occurs in the IMS domain, the CSI terminal reports an IMS supplementary service session message directly to the interworking control function entity, and the interworking control function entity performs corresponding supplementary service operations in accordance with specific contents of the session message, thereby achieving processing of the supplementary service in the IMS domain when the CSI terminal interworks with the IMS terminal.

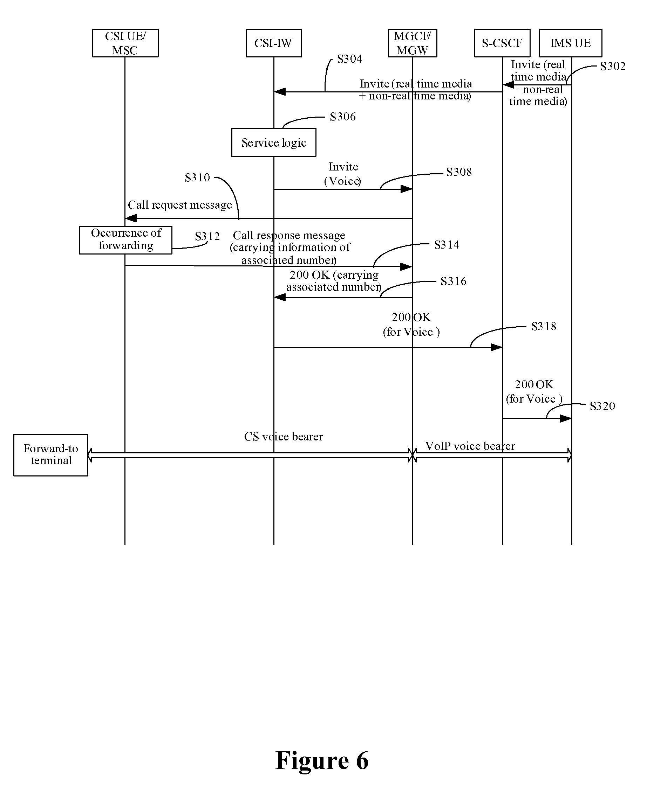

Embodiments of the present invention are described in detail below with reference to Figure 6 to Figure 10.

Figure 6 illustrates the inventive system and method, in which the IMS terminal calls the CS terminal, a CS call of the CSI terminal is forwarded and the CSI-IW decides not to set up a non-real time media session, according to the first embodiment of the present invention.

As illustrated in Figure 6, a specific procedure of this flow includes the following the steps.

Step S302: The IMS terminal initiates an IMS session request to the CSI terminal, this request including real time media description and non-real time media description;

Step S304: The IMS entity at the IMS terminal side forwards the request to the CSI-IW at the CSI terminal side;

Step S306: The CSI-IW performs service logic processing in accordance with relevant information;

Step S308: The CSI-IW initiates a session request to the CS part of the CSI terminal;

Step S310: The MGCF, on receiving the session request message from the CSI-IW, maps the session request message to a call request message of the CS domain and sends the call request message of the CS domain to the CSI terminal;

Step S312: Call forward occurs at the CS part of the CSI terminal;

Step S314: The forward-to terminal sends a call response message to the MGCF, and the MGCF obtains forward-to number from the call response message;

Step S316: The MGCF carries information of the forward-to number in a response message which will be sent to the CSI-IW;

Step S318: The CSI-IW decides to send no IMS session to the forward-to terminal. The CSI-IW sends a message 200 OK carrying only real time media information to the IMS at the IMS side. In this step, the CSI-IW may decide to proceed with setting up a subsequent IMS session to the CSI terminal. In this case, the CSI-IW proceeds with sending an INVITE message of a non-real time service (non-real time media) to the CSI terminal. After the CSI terminal sends a response message to the INVITE message, the CSI-IW combines the real time response message from the forward-to terminal and the non-real time response message from the CSI terminal and sends the combined message to the IMS terminal; and

Step S320: The IMS entity at the IMS terminal side forwards the message to the IMS terminal. In this case, only a media stream of a real time service occurs between the IMS and the forward-to terminal.

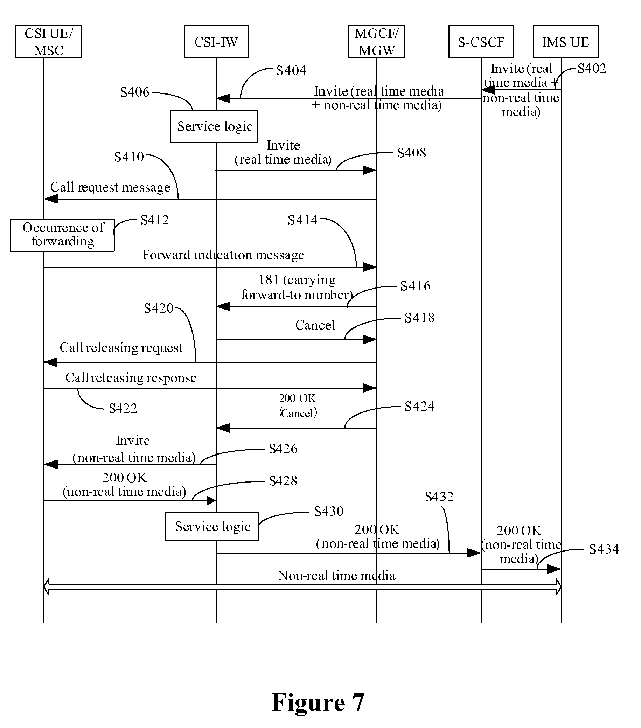

Figure 7 illustrates the inventive system and method, in which the IMS terminal calls the CS terminal, a CS call of the CSI terminal is forwarded, and the CSI-IW receives a forward indication message and decides to set up only a non-real time media session, according to the second embodiment of the present invention.

As illustrated in Figure 7, a specific procedure of this flow includes the following the steps.

Step S402: The IMS terminal initiates an IMS session request to the CSI terminal, this request including real time media description and non-real time media description;

Step S404: The IMS terminal at the IMS terminal side forwards the request to the CSI-IW at the CSI terminal side;

Step S406: The CSI-IW performs service logic processing in accordance with relevant information;

Step S408: The CSI-IW initiates a session request to the CS part of the CSI terminal;

Step S410: The MGCF, on receiving the session request message from the CSI-IW, maps the session request message to a call request message of the CS domain and sends the call request message to the CS part of the CSI terminal;

Step S412: Call forward occurs at the CS part of the CSI terminal;

Step S414: The MGCF receives a forward indication message;

Step S416: The MGCF maps the forward indication message to a message 181 and sends the message 181 to the CSI-IW;

Step S418: The CSI-IW decides to release the CS call between the CSI-IW and a forward-to terminal. The CSI-IW sends a message CANCEL to the MGCF. In this step, the CSI-IW may decide to proceed with setting up a subsequent IMS session between the CSI-IW the CSI terminal. In this case, the CSI-IW proceeds with sending a message of a non-real time service (non-real time media) INVITE to the CSI terminal. After the CSI terminal sends a response message to the message INVITE, the CSI-IW combines a real time response message from the forward-to terminal and the non-real time response message from the CSI terminal and sends the combined message to the IMS terminal;

Step S420: The MGCF maps the message CANCEL to a call releasing message and sends the call releasing message to the CS part of the CSI terminal;

Step S422: The CS part of the CSI terminal sends a call releasing response message;

Step 424: The MGCF maps the call releasing response message to a message 200 OK and sends the message 200 OK to the CSI-IW;

Step S426: The CSI-IW initiates a non-real time media session request to the IMS part of the CSI terminal;

Step S428: The IMS part of the CSI terminal sends a response message to the non-real time media session request;

Step S430: The CSI-IW performs a service logic control;

Step S432: The CSI-IW sends a response message 200 OK carrying only non-real time media information to an IMS entity at the calling side; and

Step S434: The IMS entity at the calling side forwards the message 200 OK to the IMS calling terminal. In this case, only a media stream of a non-real time service is set up between the IMS terminal and the CSI terminal.

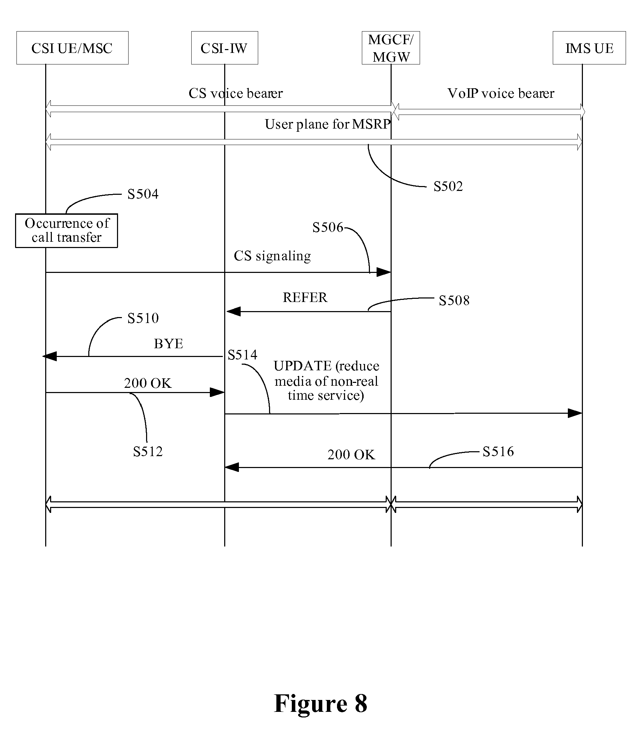

Figure 8 illustrates the inventive system and method implementing the same in which the IMS terminal calls the CSI terminal and a CS call of the CSI terminal triggers an ECT service according to the third embodiment of the present invention.

As illustrated in Figure 8, a specific procedure of this flow includes the following steps.

Step S502: A connection including both real time and non-real time media has been set up between the CSI terminal and the IMS terminal;

Step S504: Call transfer occurs at the CS part of the CSI terminal.

Step S506: The MGCF obtains from CS signaling the information of the number of a new terminal to which the transferred is directed from the CSI terminal;

Step S508: The MGCF notifies in a REFER message the CSI-IW about occurrence of the transfer at the CS part of the CSI terminal and about the information of the transfer-to number. In this step, the MGCF may also transfer the information in a message INVITE (replace) alternatively;

Step 510: The CSI-IW decides to release the IMS session between the CSI-IW and the CSI terminal. The CSI-IW sends a message BYE to the IMS part of the CSI terminal. In this step, the CSI-IW may decide transfer the IMS session set up between the CSI-IW and the CSI terminal to a new terminal. At this time, the CSI-IW sends a message of a non-time service INVITE (MSRP) to the new terminal. After the new terminal sends a response message to the message INVITE, the CSI-IW initiates a session modification message to the IMS terminal to modify non-real time service media of the IMS terminal to the new terminal.

Step 512: The IMS part of the CSI terminal sends a response message 200 OK to the message BYE;

Step S514: The CSI-IW sends a message UPDATE to the IMS terminal to modify media information of the current session to remove non-real time media information; and

Step S516: The IMS UE entity responds a message 200 OK to the CSI-IW.

Following this procedure, only real time media are present between the IMS terminal and the transfer-to CS terminal.

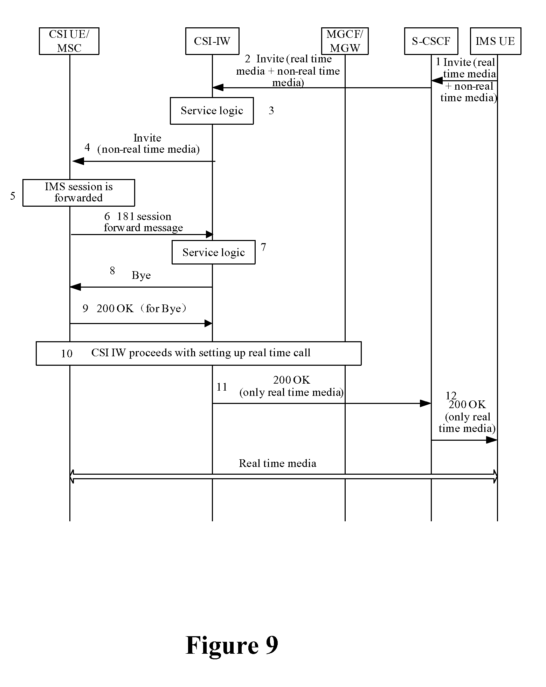

With reference to Figure 9, the fourth embodiment of the method includes the following steps.

1. The IMS UE initiates a session request including real time media description and non-real time media description to the CSI UE, this request being directed to an S-CSCF of the called CSI UE through a routing mechanism of the IMS domain.

2. The S-CSCF of the called CSI UE routes the session request to the CSI IW for processing.

3. The CSI IW executes service logic.

4. The CSI IW initiates a non-real time session request of the IMS domain to the CSI UE.

5. The IMS session request is forwarded.

6. The CSI IW receives a forward indication message 181.

7. The CSI IW performs service logic processing. The CSI IW decides to release the forwarded IMS session.

Here, the CSI IW may have other options. For example, the CSI IW notifies the calling party about non-real time media forwarding or session forwarding. Alternatively, the CSI IW may cancel or release a CS call, and attempt to set up a CS call to a forward-to terminal, etc.

8. The CSI IW initiates a request BYE to the CSI UE.

9. The CSI UE sends a response 200 OK to the request BYE.

10. The CSI IW proceeds with setting up a CS real time call between the CSI IW and the CSI UE.

11 and 12: The CSI IW responds to the calling part with a response 200 OK message carrying only real time media information upon successful setting up.

Here, the CSI IW responds to the calling party with a different response message if it decides to adopt alternative processing.

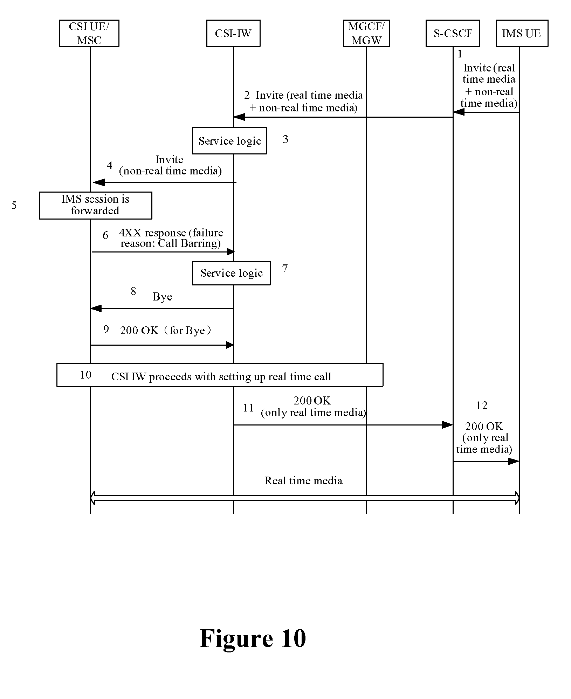

With reference to Figure 10, the fifth embodiment of the method includes the following steps.

1. The IMS UE initiates a session request including real time media description and non-real time media description to the CSI UE, this request being directed to an S-CSCF of the called CSI UE through a routing mechanism of the IMS domain.

2. The S-CSCF of the called CSI UE routes the request to the CSI IW for processing.

3. The CSI IW executes service logic.

4. The CSI IW initiates a non-real time session request of the IMS domain to the CSI UE.

5 to 6. The IMS session request fails, and the CSI IW receives a failure response message 4XX carrying call barring as a failure reason.

7. The CSI IW performs service logic processing. The CSI IW decides to release the transferred IMS session.

8. The CSI IW initiates a request BYE to the CSI UE.

9. The CSI UE sends a response 200 OK to the request BYE.

10. The CSI IW proceeds with setting up a CS real time call between the CSI IW and the CSI UE.

11 and 12: The CSI IW responds to the calling part with a response message 200 OK carrying only real time media information upon successful setting up.

Here, the CSI IW responds to the calling party with a different response message if it decides to adopt alternative processing.

Apparently, those skilled in the art can make various modifications and variations to the invention within the scope of the invention. Accordingly, the invention is intended to encompass these modifications and variations of the invention provided that these modifications and variations fall within the scope of the appended claims and equivalents thereof.

## Claims

1. A supplementary service processing method, for a supplementary service when a combining Circuit Switched domain and IP Multimedia Subsystem (CSI) terminal interworks with an IP Multimedia Subsystem (IMS) terminal in a packet network, comprising the steps of:
obtaining, by an interworking control function entity, specific contents from a supplementary service-related session message on receiving the session message; and
performing, by the interworking control function entity, corresponding supplementary service operations in accordance with the obtained specific contents.

2. The method according to claim 1, wherein the specific contents of the session message comprise at least one of the following: supplementary service information of the Circuit Switched (CS) domain, response information of a session in an IMS domain session, and supplementary service information of a session in the IMS domain.

3. The method according to claim 2, wherein before the interworking control function entity receives the supplementary service-related session message of the CS domain, the method further comprises the steps of: mapping, by a media gateway control function entity in the domain to which the CSI terminal is homed to, supplementary service-related information in circuit switched signaling to a session message of the IMS domain, and forwarding the session message to the interworking control function entity.

4. The method according to claim 3, wherein the supplementary service-related information in the circuit switched signaling is a call forward indication message of the CS domain of the CSI terminal, mapping the call forward indication message to a relevant session message of the IMS domain.

5. The method according to claim 3, wherein the supplementary service-related information in the circuit switched signaling is a response message to a forwarded call of the CS domain, mapping the call response message to a session message of the IMS domain.

6. The method according to claim 3, wherein the supplementary service-related information in the circuit switched signaling is information of an ECT service of the CS domain, mapping information of the transfer-to number of the CS domain to a session message of the IMS domain.

7. The method according to claim 3, wherein the supplementary service-related information in the circuit switched signaling is information of a call holding service or a call resumption service, mapping the information to an Update message of the IMS domain.

8. The method according to claim 3, wherein the service-related information in the circuit switched signaling is a call failure message of the CS domain, mapping the call failure message to a call failure message of the IMS domain.

9. The method according to claim 4, wherein the interworking control function entity receives the relevant session message, indicating a CS domain call of the CSI terminal is forwarded, of the IMS domain sent from the media gateway control function entity, and performs the following operations:
releasing the circuit switched call between the interworking control function entity and the CSI terminal, maintaining or proceeding with setting up an IMS session between the interworking control function entity and the CSI terminal, and carrying on a corresponding session negotiation with the IMS terminal; or
releasing an IMS session between the interworking control function entity and the CSI terminal, retaining only the CS call, and carrying on a corresponding session media negotiation with the IMS terminal; or
notifying the IMS terminal that the session therebetween or part of media of the session is forwarded.

10. The method according to claim 5, wherein the interworking control function entity performs the following operations in accordance with the session message of the IMS domain sent from the media gateway control function entity:
releasing or canceling the forwarded CS call, maintaining or proceeding with setting up an IMS session between the interworking control function entity and the CSI terminal, and carrying on a corresponding session media negotiation with the IMS terminal; or
releasing an IMS session between the interworking control function entity and the CSI terminal, attempting to set up an IMS session to a forward-to terminal; and responding to a caller with a success response message indicating that the session is forwarded upon successful setting-up; or
releasing an IMS session between the interworking control function entity and the CSI terminal, retaining only the CS call, and carrying on a corresponding session media negotiation with the IMS terminal; or
notifying the IMS terminal that the session therebetween or part of media of the session is forwarded.

11. The method according to claim 6, wherein the interworking control function entity performs the following operations in accordance with the session message of the IMS domain sent from the media gateway control function entity:
releasing a transferred circuit switched call, maintaining or subsequently setting up a non-real time session between the interworking control function entity and the CSI terminal, and carrying on a session media negotiation or renegotiation with the IMS terminal; or
releasing or canceling a non-real time IMS session probably set up between the interworking control function entity and the CSI terminal, attempting to set up a non-real time IMS session with a new terminal, and carrying on a session negotiation or renegotiation with the IMS terminal; or
releasing or canceling a non-real time IMS session between the interworking control function entity and the CSI terminal, retaining only a CS call, and carrying on a session negotiation or renegotiation with the IMS terminal; or
notifying the IMS terminal that the ECT service session occurs in the circuit switched domain or part of media of the session is transferred.

12. The method according to claim 7, wherein the interworking control function entity sends a relevant session modification message to the IMS terminal to perform corresponding modification of relevant media attributes of the IMS session in accordance with the received Update message of the IMS domain indicating occurrence of a call holding service or a call resumption service in the CS domain of the CSI terminal.

13. The method according to claim 12, wherein the corresponding modification of the relevant media attributes comprises: the interworking control function entity initiates a deactivation or activation operation of real time media of the IMS terminal, if the interworking control function entity receives call holding or call resumption information of the CS domain.

14. The method according to claim 8, wherein the interworking control function entity performs the following operations in accordance with the mapped call failure message of the IMS domain sent from the media gateway control function entity, wherein the call failure message indicates a failure of a call from the interworking control function entity to the CS domain of the CSI terminal:
if there is still an IMS domain session present between the interworking control function entity and the CSI terminal, considering the status of another session and sending a corresponding response message to the IMS terminal; or
maintaining a non-real time IMS session probably present between the interworking control function entity and the CSI terminal or proceeding with setting up a subsequent non-real time IMS session between the interworking control function entity and the CSI terminal, carrying on a corresponding session negotiation with the IMS terminal and removing part of media borne in the CS domain; or
releasing or canceling an IMS session between the interworking control function entity and the CSI terminal, and responding to the IMS terminal with a failure response message.

15. The method according to claim 3, further comprising: mapping, by the media gateway control function entity in the domain to which the CSI terminal is homed, a supplementary service-related message of the IMS domain to a signaling message of the CS domain and forwarding the signaling message to an entity in the CS domain, on receiving the session message.

16. The method according to claim 2, wherein the interworking control function entity receives a session message, indicating occurrence of a media activation/deactivation service in the IMS domain, of the IMS domain, and sends a relevant session modification message to the IMS terminal to perform corresponding modification of relevant media attributes of the IMS session.

17. The method according to claim 16, wherein the corresponding modification of the relevant media attributes of the IMS session comprises initiation of an activation or deactivation operation of real time media of the IMS terminal.

18. The method according to claim 2, wherein the interworking control function entity receives the session message of the IMS domain, the contents of the session message are session failure information of the IMS domain, and the session failure information indicates a failure of a session from the interworking control function entity to the IMS domain of the CSI terminal, and the interworking control function entity performs the following operations:
maintaining a real time CS call probably present between the interworking control function entity and the CSI terminal or proceeding with setting up a subsequent real time CS call between the interworking control function entity and the CSI terminal, carrying on a corresponding session negotiation with the IMS terminal, and removing part of media borne in the IMS domain; or
initiating an IMS session setting-up request to a new CS terminal in accordance with received call forward information of the CS domain; and carrying session forward indication message in a response message to the IMS terminal if the IMS session is set up successfully; or
releasing or canceling a CS session between the interworking control function entity and the CSI terminal, and responding to the IMS terminal with a failure response message.

19. The method according to claim 2, wherein the interworking control function entity receives the session message of the IMS domain, the contents of the session message are session forward indication of the IMS domain, and the forward-transfer indication indicates that a call from the interworking control function entity to the IMS domain of the CSI terminal is forwarded; or the interworking control function entity receives the message which indicates that a IMS domain session of the CSI terminal is forwarded and that a forward-to party has responded, then the interworking control function entity performs the following operations:
releasing or canceling the forwarded IMS session, maintaining or proceeding with setting up a CS call between the interworking control function entity and the CSI terminal, carrying on a corresponding session negotiation with the IMS terminal, and removing part of media borne in the IMS session; or
releasing or canceling a CS call between the interworking control function entity and the CSI terminal, carrying on a corresponding session negotiation with the IMS terminal, and removing part of media borne in the CS call; or
releasing a CS session between the interworking control function entity and the CSI terminal, attempting to set up a CS call with a forward-to terminal, and responding to the IMS terminal with a session forward success response message if the CS call is set up successfully; or
perceiving that the CSI terminal is provided with subscription information of an IMS session forward service, and triggering the IMS forward service of the CSI terminal through an appropriate mechanism; or
notifying the IMS terminal that the session or part of media of the session is forwarded.

20. The method according to claim 2, wherein the interworking control function entity receives the session message, indicating that an IMS domain session of the CSI terminal is transferred, of the IMS domain, and performs the following operations:
releasing the transferred IMS session, maintaining or subsequently setting up a CS call between the interworking control function entity and the CSI terminal, and carrying on a session negotiation or renegotiation with the IMS terminal; or
releasing or canceling a CS call between the interworking control function entity and the CSI terminal, attempting to set up a real time CS session with a new terminal, and carrying on a session negotiation or renegotiation with the IMS terminal; or
notifying the IMS terminal that the session or part of media of the session is transferred.

21. An interworking control function entity, comprising:
a supplementary service information reception unit, adapted to receive a supplementary service-related session message and to obtain specific contents from the session message; and
a supplementary service operation unit, adapted to perform corresponding supplementary service operations in accordance with the specific contents obtained by the supplementary service information reception unit.

22. A media gateway control function entity, comprising a signaling reception unit, wherein the media gateway control function entity further comprises:
a mapping unit A, adapted to map supplementary service-related information in circuit switched signaling received by the signaling reception unit to a session message of the IMS domain and to forward thereafter the session message to an entity in the IMS domain.

23. The entity according to claim 22, further comprising a mapping unit B, adapted to map supplementary service-related information in IMS domain signaling received by the signaling reception unit to a session message of the CS domain and to forward the session message to an entity in the CS domain.

24. The entity according to claim 22, wherein the mapping unit A comprises at least one of the following sub-units:
a mapping unit A1, adapted to map a forward indication message for a call of the CS domain of the CSI terminal to a relevant session message of the IMS domain on receiving the forward indication message;
a mapping unit A2, adapted to map a response message to a forwarded call of the CS domain to information of the IMS domain on receiving the response message;
a mapping unit A3, adapted to map information of a transfer-to number to a session message of the IMS domain on receiving information of an ECT service of the CS domain;
a mapping unit A4, adapted to map a message of a call holding service or a call resumption service to an Update message of the IMS domain on receiving the message of a call holding service or a call resumption service; and
a mapping unit A5, adapted to map a call failure message into a call failure message of the IMS domain on receiving the call failure message.

25. A supplementary service processing system, for processing a supplementary service when a combining Circuit Switched domain and IP Multimedia Subsystem (CSI) terminal interworks with an IP Multimedia Subsystem (IMS) terminal in a packet network, comprising a media gateway control function entity located in the domain to which the CSI terminal is homed, wherein the system further comprises:
an interworking control function entity, adapted to control the interworking and to perform corresponding supplementary service operations in accordance with specific contents of a supplementary service-related session message on receiving the session message.

26. The system according to claim 25, wherein the media gateway control function entity is further adapted to map supplementary service-related information in circuit switched signaling to a session message of the IMS domain and to forward the session message to the interworking control function entity.

27. The system according to claim 26, wherein the media gateway control function entity receives supplementary service-related circuit switched signaling and performs the following processing:
A) the media gateway control function entity receives a call forward indication message of the CS domain of the CSI terminal, maps the call forward indication message to a relevant session message of the IMS domain, and thereafter forwards the session message to the interworking control function entity; or
B) the media gateway control function entity receives a response message to a forwarded call of the CS domain, maps the call response message to a session message of the IMS domain, and thereafter forwards the session message to the interworking control function entity; or
C) the media gateway control function entity receives information of an ECT service of the CS domain, maps information of the transfer-to number of the CS domain to a session message of the IMS domain, and thereafter forwards the session message to the interworking control function entity; or
D) the media gateway control function entity receives information of a call holding service or a call resumption service, maps the information to an Update message of the IMS domain, and thereafter forwards the Update message to the interworking control function entity; or
E) the media gateway control function entity receives a call failure message of the CS domain, maps the call failure message to a call failure message of the IMS domain, and thereafter forwards the call failure message of the IMS domain to the interworking control function entity.

28. The system according to claim 27, wherein the interworking control function entity performs the following processing on receiving the supplementary service-related session message:
A) on receiving the session message indicating that a CS domain call of the CSI terminal is forwarded, the interworking control function entity releases the circuit switched call between the interworking control function entity and the CSI terminal, maintains or proceeds with setting up an IMS session between the interworking control function entity and the CSI terminal, and carries on a corresponding session negotiation with the IMS terminal; or the interworking control function entity releases an IMS session between the interworking control function entity and the CSI terminal, retains only the CS call, and carries on a corresponding session media negotiation with the IMS terminal; or notifies the IMS terminal that the session therebetween or part of media of the session is forwarded; or
B) on receiving the session message indicating that a CS domain session of the CSI terminal is forwarded and that a forward-to party has responded, the interworking control function entity releases or cancels the forwarded CS call, maintains or proceeds with setting up an IMS session between the interworking control function entity and the CSI terminal, and carries on a corresponding session media negotiation with the IMS terminal; or the interworking control function entity releases an IMS session between the interworking control function entity and the CSI terminal, attempts to set up an IMS session to a forward-to terminal, and responds to a caller with a success response message indicating that the session is forwarded upon successful setting-up; or the interworking control function entity releases an IMS session between the interworking control function entity and the CSI terminal, retains only the CS call and carries on a corresponding session media negotiation with the IMS terminal; or the interworking control function entity notifies the IMS terminal about that the session therebetween or part of media of the session is forwarded; or
C) on receiving the session message indicating occurrence of an ECT service in the CS domain of the CSI terminal, the interworking control function entity releases a transferred circuit switched call, maintains or subsequently sets up a non-real time session between the interworking control function entity and the CSI terminal, and carries on a session media negotiation or renegotiation with the IMS terminal; or the interworking control function entity releases or cancels a non-real time IMS session probably set up between the interworking control function entity and the CSI terminal, attempts to set up a non-real time IMS session to a new terminal, and carries on a session negotiation or renegotiation with the IMS terminal; or the interworking control function entity releases or cancels a non-real time IMS session between the interworking control function entity and the CSI terminal, retains only a CS call, and carries on a session negotiation or renegotiation with the IMS terminal; or the interworking control function entity notifies the IMS terminal that the ECT service session occurs or part of media of the session is transferred in the circuit switched domain; or
D) on receiving the Update message indicating occurrence of a call holding service or a call resumption service in the CS domain of the CSI terminal, the interworking control function entity sends a relevant session modification message to the IMS terminal to perform corresponding modification of relevant media attributes of the IMS session; or
E) on receiving the call failure message of the IMS domain indicating a failure of a call from the interworking control function entity to the CS domain of the CSI terminal, if there is still another domain session present between the interworking control function entity and the CSI terminal, the interworking control function entity considers the status of the another session and sends a corresponding response message to the IMS terminal; or the interworking control function entity maintains a non-real time IMS session probably present between the interworking control function entity and the CSI terminal or proceeds with setting up a subsequent non-real time IMS session between the interworking control function entity and the CSI terminal, carries on a corresponding session negotiation with the IMS terminal, and removing part of media borne in the CS domain; or the interworking control function entity releases or cancels an IMS session between the interworking control function entity and the CSI terminal, and responds to the IMS terminal with a failure response message.

29. The system according to claim 25, wherein the interworking control function entity receives the supplementary service-related session message the contents of which are information of a supplementary service occurring in the IMS domain and performs the following processing:
a) the interworking control function entity receives a session message of the IMS domain indicating occurrence of a media activation/deactivation service in the IMS domain, and sends a relevant session modification message to the IMS terminal to perform corresponding modification of relevant media attributes of the IMS session; or
b) on receiving a session message of the IMS domain, wherein the contents of the session message are session failure information of the IMS domain and the session failure information indicates a failure of a session from the interworking control function entity to the IMS domain of the CSI terminal, the interworking control function entity maintains a real time CS call probably present between the interworking control function entity and the CSI terminal or proceeds with setting up a subsequent real time CS call between the interworking control function entity and the CSI terminal, carries on a corresponding session negotiation with the IMS terminal, and removes part of media borne in the IMS domain; or the interworking control function entity initiates an IMS session setting-up request to a new CS terminal in accordance with received call forward information of the CS domain, and carries session forward indication information in a response message to the IMS terminal if the IMS session is set up successfully; or the interworking control function entity releases or cancels a CS session between the interworking control function entity and the CSI terminal, and responds to the IMS terminal with a failure response message; or
c) on receiving a session message of the IMS domain the contents of which are session forward indication of the IMS domain, which forward indication indicating that a call from the interworking control function entity to the IMS domain of the CSI terminal is forwarded or on receiving the message which indicates that a IMS domain session of the CIS terminal is forwarded and that a forward-to party has responded, the interworking control function entity releases or cancels the forwarded IMS session, maintains or proceeds with setting up a CS call between the interworking control function entity and the CSI terminal, carries on a corresponding session negotiation with the IMS terminal, and removes part of media borne in the IMS session; or the interworking control function entity releases or cancels a CS call between the interworking control function entity and the CSI terminal, carries on a corresponding session negotiation with the IMS terminal, and removes part of media borne in the CS call; or the interworking control function entity releases a CS session between the interworking control function entity and the CSI terminal, attempts to set up a CS call between the interworking control function entity and a forward-to terminal, and responds to the IMS terminal with a session forward success response message if the CS call is set up successfully; or the interworking control function entity perceives that the CSI terminal is provided with subscription information of an IMS session forward service, and triggers the IMS forward service of the CSI terminal through an appropriate mechanism; or the interworking control function entity notifies the IMS terminal that the session or part of media of the session is forwarded; or
d) on receiving a session message of the IMS domain indicating that a IMS domain session of the CSI terminal is transferred, the interworking control function entity releases the transferred IMS session, maintains or subsequently sets up a CS call between the interworking control function entity and the CSI terminal, and carries on a session negotiation or renegotiation with the IMS terminal; or the interworking control function entity releases or cancels a CS call between the interworking control function entity and the CSI terminal, attempts to set up a real time CS session with a new terminal, and carries on a session negotiation or renegotiation with the IMS terminal; or the interworking control function entity notifies the IMS terminal that the session of part of media of the session is transferred.

30. The system according to claim 25, wherein the media gateway control function entity is further adapted to map supplementary service-related information in IMS domain signaling to a session message of the CS domain and to forward thereafter the session message to a CS entity.

31. A supplementary service processing device, for processing a supplementary service when a combining Circuit Switched domain and IP Multimedia Subsystem (CSI) terminal interworks with an IP Multimedia Subsystem (IMS) terminal in a packet domain, comprising:
a supplementary service operation module, adapted to enable an interworking control function entity to perform supplementary service operations in accordance with contents in a session message on receiving the session message.

32. The device according to claim 31, further comprising a mapping module, adapted to enable a media gateway control function entity in the domain to which the CSI terminal is homed to map supplementary service-related information in circuit switched signaling to a signaling message of the IMS domain and to forward the signaling message to the interworking control function entity.

33. The device according to claim 32, wherein the mapping comprises at least one of the following sub-modules:
a first mapping module, adapted to enable the media gateway control function entity to notify the interworking control function entity about a forward indication message for a call of the CS domain of the CSI terminal, if the media gateway control function entity receives the forward indication message;
a second mapping module, adapted to enable the media gateway control function entity to map a response message to a forwarded call of the CS domain to a message of the IMS domain and notify the interworking control function entity about the message of the IMS domain, if the media gateway control function entity receives the response message; and
a third mapping module, adapted to enable the media gateway control function entity to notify the interworking control function entity about information of a transfer-to number, if the media gateway control function entity receives information of an ECT service of the CS domain.

34. A media gateway control function enhancement system, comprising a media gateway control function entity, wherein the media gateway control function entity comprises:
a Circuit Switched (CS) signaling information-to-IMS signaling information mapping module, adapted to map received supplementary service signaling information of the CS domain to signaling information of the IMS domain; and
an IP Multimedia Subsystem (IMS) signaling information-to-CS signaling information mapping module adapted to map received supplementary service signaling information of the IMS domain to signaling information of the CS domain.

35. The system according to claim 34, wherein the media gateway control function entity performs the following processing on receiving the supplementary service signaling information of the CS domain:
i) the media gateway control function entity receives a forward indication message for a call of the CS domain of the CSI terminal, and notifies an interworking control function entity of the forward indication message; or
ii) the media gateway control function entity receives a response message to a forwarded call of the CS domain, and notifies the interworking control function entity of a transfer-to number; or
iii) the media gateway control function entity receives information of an ECT service of the CS domain, and notifies the interworking control function entity of information of a transfer-to number.

36. A media gateway control function enhancement method, comprising the steps of:
if a media gateway control function entity receives supplementary service signaling information of the CS domain, mapping it into signaling information of the IMS domain; and
if the media gateway control function entity receives supplementary service signaling information of the IMS domain, mapping the supplementary service signaling information of the IMS domain to signaling information of the CS domain.

37. The method according to claim 36, wherein the media gateway control function entity performs the following processing on receiving the supplementary service signaling information of the CS domain:
01) if the media gateway control function entity receives a forward indication message for a call of the CS domain of the CSI terminal, the media gateway control function entity notifies an interworking control function entity of the forward indication message;
02) if the media gateway control function entity receives a response message to a forwarded call of the CS domain, the media gateway control function entity notifies the interworking control function entity of a transfer-to number; and
03) the MGCF receives information of an ECT service of the CS domain, and the media gateway control function entity notifies the interworking control function entity of a transfer-to number.
